# EUROPEAN PATENT APPLICATION

(11) **EP 4 538 013 A1**
(43) Date of publication of application: **16.04.2025**
(21) Application number: 23203029.6
(22) Date of filing: 11.10.2023
(51) Int. Cl.: B29C 44/34, B29C 33/04, B29C 33/38, B29C 44/58, B29C 33/00, B29C 44/44

(54) **ENERGY EFFICIENT TOOL AND METHOD FOR MOULDING EXPANDED POLYMER FOAM ARTICLES**

(71) Applicant: CK Teknik A/S, 7200 Grindsted (DK)
(72) Inventor: Krog, Carsten, 7200 Grindsted (DK); Mortensen, Svend, 7190 Billund (DK)
(74) Representative: Patrade A/S

(57) **Abstract**

The present invention relates to a tool for a shape moulding machine for producing articles in expanded polymer foam. It is an object of the invention to provide a tool, a shape moulding machine with the tool and a method for using the tool. The tool (1) comprises a first tool part (10) and a second tool part (20), each tool part having a wall thickness, a cavity surface being the mould surface and a vapour surface facing away from the cavity surface, wherein the first tool part and the second tool part are configured to be connected to form a closed cavity between the cavity surfaces, and wherein the first tool part and/or the second tool part comprises one or more material inlets configured to receive polymer foam beads and transfer said polymer foam beads to the closed cavity, wherein the first tool part (10) and the second tool part (20) each comprises a plurality of channels extending between the cavity surface and the vapour surface, said channels being configured to transfer steam from the vapour surface to the closed cavity.

## Description

### Field of the Invention

The present invention relates to a tool and a method for a shape moulding machine for producing articles in expanded polymer foam. The tool comprises a first tool part and a second tool part, each tool part having a wall thickness, a cavity surface being the mould surface and a vapour surface facing away from the cavity surface, wherein the first tool part and the second tool part are configured to be connected to form a closed cavity between the cavity surfaces, and wherein the first tool part and/or the second tool part comprises one or more material inlets configured to receive polymer foam beads and transfer said polymer foam beads to the closed cavity, wherein the first tool part and the second tool part each comprises a plurality of channels extending between the cavity surface and the vapour surface, said channels being configured to transfer steam from the vapour surface to the closed cavity.

### Background of the Invention

Prior art tools for moulding expanded polymer foam articles are provided with massive and thick walls, as the walls are required to hold replaceable nozzles firmly, in a sealing manner and flush with an inside surface of the walls. Furthermore, the nozzles are provided with channels placed in clusters for transferring steam and cooling to a cavity of the tool where polymer foam beads are expanded into the expanded polymer foam articles.

The inside surface facing the cavity of the prior art tools is often covered with a non-stick surface treatment such as e.g., thermoplastic fluoropolymer also known as Teflon or other non-stick coating, in order to easily extract the article from the tool after expansion.

### Object of the Invention

One objective of the present disclosure is to achieve a tool for producing articles in expanded polymer foam, where the tool improves the production process by reducing the production time, consume less energy in terms of steam, heating and/or cooling, and in terms of requiring less maintenance in terms of repair, replacement, and cleaning.

One further objective is to achieve an improved production of the expanded polymer foam article by using the tool and thus ensuring that the structure and surface of the article is improved.

### Description of the Invention

One or more objectives of the invention are achieved by a tool for a shape moulding machine for producing articles in expanded polymer foam.

In one embodiment the tool comprises a first tool part and a second tool part each having a wall thickness, a cavity surface being the mould surface and a vapour surface facing away from the cavity surface, wherein the first tool part and the second tool part are configured to be connected to form a closed cavity between the cavity surfaces, and wherein the first tool part and/or the second tool part comprises one or more material inlets configured to receive polymer foam beads and transfer the polymer foam beads to the closed cavity, wherein the first tool part and the second tool part each comprises a plurality of channels extending between the cavity surface and the vapour surface, the channels being configured to transfer steam from the vapour surface to the closed cavity.

An article made in expanded polymer foam or polymer foam material refers to an article produced in a shape moulding machine, where polymer foam beads from various polymers are expanded into the shape of the article. The polymer foam beads may be made of e.g., polypropylene, polystyrene, polyethylene, etc. thus the expanded polymer foam material may be expanded polypropylene (EPP), expanded polystyrene (EPS), expanded polyethylene (EPE) or any other similar materials or combinations thereof. The shape of the article is determined by the shape of the tool, i.e., the tool is similar to a mould.

The tool may be configured for producing an article in any desirable shape e.g., a solid cuboid, a hollow cuboid with a lid, a thin sheath, a sphere, a hollow sphere or box comprising two parts or halves, a cone, a pyramid, a cylinder, a prism, a tetrahedron, octahedron, dodecahedron, icosahedron, or any combination thereof. Thus, depending on the shape of the article to be produced in the tool, the tool may comprise a bottom plate and/or one or more walls assembled together to combine into a mould suitable for producing the specific articles. The bottom plate and/or walls are arranged between the cavity surface and the vapour surface, and the wall thickness is defined as the thickness of the bottom plate and/or the walls. The wall thickness may also be defined as the distance between the cavity surface and the vapour surface.

The tool may comprise multiple matching sets of the first tool and the second tool, such that the tool and the shape moulding machine can produce a plurality of articles in one production cycle. For example, six sets of the first tool and the second tool may be arranged on a first mounting plate and a second mounting plate, respectively. The first mounting plate and the second mounting plate are configured to fit into commercially available shape moulding machines, so that six articles can be produced at one time with the tool. The first mounting plate and the second mounting plate configured to enable steam, water and/or air to be transferred optimally from the vapour surface and to the closed cavity.

The first tool part may be a male tool configured for connecting with the second tool part, wherein the second tool part may be a female tool, which may be suitable for e.g., producing an open box with a floor and four upstanding walls or any other article with a hollow interior.

The first tool part and the second tool part may be constructed by milling one or more components of the parts from a raw material and assembling the components by screwing, adhering, or welding the components together to assemble the first tool part and the second tool part. Furthermore, the first mounting plate, the second mounting part and the one or more frames may be constructed and assembled in the same manner. One effect of milling the parts from a raw material is that the surface of the cavity surface may be made very smooth such that no defects appear in the produced article, e.g., by excess material projecting outwards from the surface of the article.

The wall thickness is a thickness measured between the cavity surface and the vapour surface, i.e., the depth of the channels.

The connection between the first tool part and the second tool part is achieved by the shape moulding machine comprising one or more hydraulic, electrical, pneumatic and/or mechanical means for bringing the first tool part and the second tool part together, or for bringing the first mounting plate and the second mounting plate closer together. Alternatively, only one of either the first tool part or the second tool part is brought together with the other stationary part. As the first tool part and the second tool part are brought together, the closed cavity is defined between the cavity surfaces of the first tool part and the second tool part.

The closed cavity may be sealed so that connecting edges or surfaces between the first tool part and the second tool part is water-tight, air-tight and/or steam-tight, the so-called sealing connection may be achieved by providing a collar and/or a grove in the first tool part and/or in the second tool part, and the collar and/or the grove may further be provided with one or more seals such as a rubber seal, membrane and/or O-ring. Similarly, when multiple first tool parts and second tool parts are provided respectively on a first mounting plate and a second mounting plate, one or more frames may be arranged surrounding the first tool parts and the second tool parts, wherein the frames comprise the seals or additional seals configured for making each closed cavity water-tight.

The one or more material inlets are arranged as apertures between the vapour surface and the cavity surface, the material inlets may be arranged anywhere on the first tool part and/or the second tool part, whichever placement is preferable for the one or more material injectors arranged in the shape moulding machine. The material inlet is an interface between the material injector and the closed cavity, so that the closed cavity can receive polymer foam beads from the shape moulding machine. The polymer foam beads are suitable for being expanded into the article inside the closed cavity.

In a further aspect of the tool, the tool comprises one or more ejector apertures suitable for holding an ejector, wherein the ejector is configured to eject the finished expanded polymer foam article. During production of the article, the ejector sits flush with the cavity surface of the first tool part and/or the second tool part, and when the first tool part and the second tool part are disconnected, the ejector can rise from the cavity surface and thus eject the article from the cavity surface. The ejector and/or the ejector aperture may be provided with one or more rubber seals or O-rings configured for making the ejector and ejector aperture impermeable to steam and/or water. In a further aspect of the ejector, the ejection may be performed by providing ejection air for blowing the article out of the tool parts. The ejector function may also be provided in the material injector. The ejector function may also be provided by vacuum means which sucks onto the article and pulls the article out of the tool part.

The plurality of channels extending form the cavity surface to the vapour surface are made directly in the walls of the first tool part and the second tool part, and provide the path for air, cooling, heat, and/or steam to be transmitted from the cavity surface to the vapour surface. However, cooling and heating energy may also be transferred through the walls between the vapour surface to the cavity surface. As such the tool does not require prior art nozzles with multiple apertures or holes to be fitted into the channels. One effect of providing the channels directly in the first tool part and the second tool part is that the more labour intensive and costly step of fitting the nozzles into the tool parts is skipped, as the nozzles are generally a consumable part which wears down with every use of the tool part. Furthermore, because nozzles are not used the produced expanded foam article does not obtain an imprint or a defect of the nozzle on the surface of the article which is in close proximity to the nozzle. An imprint or a defect resulting from a nozzle is e.g., a small grove projecting from the surface of the article which is carried over from the outer circumference of the nozzle. The nozzle imprint appears even when the nozzles are fitted as flush as possible with the cavity surface of the tool.

In a further embodiment of the tool the wall thickness is less than 15 mm, in the range of 1 to 10 mm, 1.5 to 6 mm or 2 to 4 mm.

In one aspect, the wall thickness of the first tool part and/or the second tool part can be made relatively thin compared to prior art tools, because the present tool is not required to hold nozzles which have to be pressed or hammered into the tool parts. As such, the tool parts will not need to be able to withstand denting and/or bending during the fitting of nozzles, as this re-occurring step is skipped. As the channels are milled or drilled into the tool part during construction of the tool parts, there is little to no risk of the vapour surface and the cavity surface being warped or damaged during the construction.

One effect of making the wall thickness less than 15 mm, is that the energy required to transmit heat and cooling into the closed cavity is considerably reduced, as the thickness of the walls is reduced compared to prior art tools which are provided with much thicker walls. I.e., the thermal capacity of the thin walls of the present tool is greatly reduced compared to prior art tools. Tests have shown that approximately 20-30% less steam is required for the tool of the present invention compared to prior art tools.

One further effect is that the time required to produce any given article is reduced, because the time to heat and/or cool the foam material is reduced due to the more efficient transfer of heating and cooling from the vapour surface to the closed cavity. Thus, a higher yield can be achieved in the same time period as when a prior art tool is used. Tests have shown that due to the increased efficiency, approximately 10% more articles can be produced in the same time period compared to prior art tools.

In a further embodiment of the tool the channels are in the range of 0.2 to 1.2 mm, 0.4 to 1 mm or 0.6 to 0.8 mm in diameter.

One effect of dimensioning the diameter of the channels in the range from 0.2 to 1.2 mm is that the channels do not weaken the strength of the tool parts when the channels are milled or drilled into the tool parts, as such the wall thickness of the tool parts can be made suitably thin compared to prior art tools, where wide apertures are made in the tools to accommodate wide nozzles which are punched into the tools wall.

One further effect of the diameter of the channels is that a sufficient amount of steam is transferred into the closed cavity from the vapour surface, so that the polymer foam beads are properly expanded.

One further effect of providing the channels with a diameter less than 1.2 mm directly in the vapour surface and the cavity surface, is that there is no or a very limited amount of imprints or defects which are carried onto the article compared to prior art tools using nozzles, as was discussed previously in the present disclosure.

In a further embodiment of the tool any two channels are arranged with a minimum distance being in the range of 4 to 14 mm, 6 to 12 mm, or 8 to 10 mm.

One effect of channels being at least 4 mm apart and preferably 10 mm apart is that as steam is transferred from the vapour surface to the closed cavity, the wall material between the channels does not reach an excessively high temperature, as a result the foam beads have a reduced risk of plasticisation when coming into contact with the cavity surface. Plasticisation results in that the channel becomes cluttered with foam bead material which is stuck in the channel or a part of the channel, thereby reducing the vapour, heat and/or cooling throughput of the channel. In prior art nozzles the multiple apertures or holes in the nozzles are placed closely together, which increases the risk of plasticisation which requires cleaning or replacement of the nozzles. Therefore, the present tool requires less maintenance and can produce more samples before maintenance is required or downtime inevitably occurs. Furthermore, because prior art tools with nozzles must be made with a much thicker wall thickness, as was discussed in this disclosure, a higher temperature heating is required which will significantly increase the temperature of the wall material between the apertures or holes in the nozzle, which further increases the risk of plasticisation. Therefore, the spacing of the channels increases the time between required maintenance and thus enables the tool to be used to produce more articles in the same time period, compared to prior art tools.

Tests performed in the same shape moulding machine producing the same article with a prior art tool and a tool of the present invention showed that the former can produce 30,000 cycles before maintenance is required and the latter can produce 75,000 cycles before maintenance is required. The tests also showed that already after having produced 8,500 cycles with the prior art tool, the produced articles had a risk of being defective or comprise defects indicating that maintenance preferably should be performed prior to the point of the actual performed maintenance at 30,000 cycles.

One further effect of providing a plurality of channels spread over the surface of the vapour surface and the cavity surface of the first tool part and the second tool part is that the steam, heating and/or cooling is evenly distributed and transferred into the closed cavity and the polymer foam beads inside the cavity. By ensuring that steam, heating and/or cooling is evenly distributed and transferred, the polymer foam beads will expand correctly and efficiently, and the produced article will obtain the intended shape, surface finish and will have a strong and rigid construction, i.e., the article is free from cracks and/or defects. By distributing and transferring steam, heating and/or cooling evenly is meant that an equal amount of the vapour and/or water, thermal heating and thermal cooling is transferred into the closed cavity and the foam beads throughout the volume and/or the surface of the cavity surface of the first tool part and the second tool part.

In a further embodiment of the tool, the channels are arranged in a substantially isometric pattern.

In one aspect, the channels may be arranged in an upright square lattice pattern.

In another aspect, the channels may be arranged in a diagonal square lattice pattern, an oblique lattice pattern, an equilateral triangular lattice pattern, a hexagonal lattice pattern, a rhombic lattice pattern, an upright rectangular lattice pattern and/or a combination thereof.

One effect of the channels being arranged in an isometric pattern is that the steam, heating and/or cooling transferred from the vapour surface to the closed cavity is transmitted as evenly as possible and throughout the volume of the cavity. Thus, less energy in terms of energy used on heating, cooling and/or on producing steam is required because the transfer is more efficient.

In one embodiment of the isometric pattern, adjacent channels may be four adjacent channels arranged at an equal distance from a first channel arranged in the centre of the four adjacent channels, wherein the adjacent channels are arranged at a 90-degree angle relative to each other and the first channel.

The square lattice pattern may be arranged in two different orientations, one called upright square lattice and another called diagonal square centred lattice, the former is a checkerboard pattern and the latter is a 45-degree rotation of the upright square lattice pattern.

In another embodiment of the isometric pattern, the isometric pattern may be a hexagonal lattice pattern or a triangular lattice pattern, wherein three adjacent channels are arranged at an equal distance from the first channel and 120-degrees apart from each other relative to the first channel. A hexagonal lattice pattern is also known as a honeycomb pattern.

In a further embodiment of the tool, the vapour surface of the first tool part and/or the second tool part comprises a plurality of ribs protruding from the vapour surface.

In one aspect the ribs may be milled from a similar material as the first tool part and the second tool part. Furthermore, the ribs may be fastened to the vapour surface by being screwed, adhered or welded together. In another aspect of the ribs, the ribs may be an integrated part of the vapour surface, wherein the one or more ribs and the vapour surface is milled out of a single material.

In one aspect of the ribs, the ribs protrude from the vapour surface perpendicular to the vapour surface, however, the ribs may also be arranged at an oblique angle relative to the vapour surface.

In another aspect of the ribs, the plurality of ribs may be arranged in parallel and/or perpendicular to each other, and the ribs can also intersect at any point along the extent of the ribs. If a vapour surface comprises e.g. a wall and a bottom plate arranged perpendicular to each other, so that an edge is defined between the wall and the bottom plate, the plurality of ribs may extend beyond the edge, so that ribs arranged on both the wall and the bottom plate are joined together, thereby increasing the stability of the entire vapour surface. This example can be applied to any one of the shapes which the first tool part and the second tool part may attain.

One effect of the plurality of ribs is that the ribs can absorb thermal energy, thereby increasing the thermal capacity of the first tool part and the second tool part. As such, by transferring heat or cooling, the temperature of the first tool part, the second tool part and the material in the closed cavity can be increased or decreased faster relative to a tool without ribs.

One further effect of the plurality of ribs is that the ribs increase the strength of the first tool part and the second tool part, by ensuring that the vapour surface and/or the cavity surface does not warp during movement, heating, cooling and/or during expansion of polymer foam inside the cavity.

In a further embodiment of the tool, the thickness of the ribs extending outwards is in the range of 1 to 8 mm, 2 to 6 mm, or 3 to 4 mm.

The thickness of the ribs is measured between two side surfaces of the ribs, wherein the side surfaces are substantially perpendicular to the vapour surface which the ribs extend from.

One effect of making the ribs less than 8 mm in thickness is that the ribs can be arranged in the spacing between the channels arranged in the vapour surface. A further effect is that the thickness of the ribs is related to the strength and support which the ribs provide to the vapour surface.

In a further embodiment of the tool, the vapour surface of the first tool part and/or the second tool part comprises one or more stabilising bars configured to increase the rigidity of the first tool part and/or the second tool part, respectively.

In one aspect the stabilising bars may be arranged onto one or more of the ribs arranged on the cavity surface. The stabilising bars may be arranged on a single first tool part or second tool part, or the stabilising bars may be arranged on multiple first tool parts or second tool parts, so that the stability and strength of a single tool part or multiple tool parts are increased.

In one aspect of the present invention, the stabilising bars is part of an interface between the shape moulding machine and the first tool part and/or the second tool part.

In one aspect of the stabilising bars, the stabilising bars are arranged inside a hollow volume and connected to one or more sides of the volume, the hollow volume may be the vapour surface which is in a shape similar to but not limited to a concave surface or a hollow box.

In an aspect of the stabilising bars, the thickness of the stabilising bars is measured between two side surfaces of the stabilising bars, wherein the side surfaces are substantially perpendicular to the extent of the stabilising bars, i.e., similarly to the ribs. In a further aspect, the thickness of the stabilising bars is less than 20 mm but preferably 15 mm. In a further aspect where the stabilising bars are arranged inside a hollow volume, the stabilising bars preferably have a thickness of 10 mm.

In a further embodiment of the tool, the first tool part and/or the second tool part is made of aluminium.

In one aspect of the tool, the aluminium surface of the cavity surface is configured for being in contact with the polymer foam beads and the expanded foam material.

In one aspect of the tool, the aluminium is preferably aluminium 50/83 alloy and is made without any surface treatment or surface coating such as but not limited to non-stick coating such as thermoplastic fluoropolymer also known as Teflon or other non-stick coating which are commonly used in prior art tools. In a further aspect, the ribs and/or the stabilising bars may also be made in the same aluminium alloy either separately or as an integrated part.

One effect of not using a surface treatment or coating is that the treatment or coating is not destroyed by any maintenance work performed on the cavity surface. Furthermore, by omitting the surface treatment or coating the first tool part and the second tool part are cheaper to produce and maintain and the tool is more environment friendly, because less potentially hazardous materials are used.

One further effect is that because the tool of the present invention can provide heating and cooling to the closed cavity much quicker than prior art tools, the cavity surface is not required to have a non-stick coating, because the expanded polymer foam material does not stick or adhere to the surface upon direct contact with the aluminium surface.

A further objective of the present invention is achieved by a shape moulding machine for producing articles in expanded polymer foam, the shape moulding machine comprising a moulding tool according to any one of the herein disclosed embodiments.

The shape moulding machine may further be configured to fill the one or more closed cavities of the one or more tools arranged in the shape moulding machine with polymer foam beads. The closed cavity may be filled by one or more material injectors which are part of the shape moulding machine. The one or more material injectors may be connected to the one or more material inlets in the first tool part and/or the second tool part.

In one aspect of the shape moulding machine, the shape moulding machine may further be configured for connecting the first tool part with the second tool part, such that the closed cavity is formed and sealed along the connecting surface. The connection may be formed by physically moving the first tool part and/or the second tool part closer to the opposite part. In another aspect, either the first tool part or the second tool part is attached to a fixed side, so that only the opposite tool part is moved to the fixed side tool part to connect the two tool parts.

The tool of the present invention may be adapted for being retrofitted into existing shape moulding machines.

The shape moulding machine transfers steam, heating and/or cooling to the tool by surrounding each tool part with steam, heated air and/or cooled air. The steam may be provided into a first steam chamber and a second steam chamber, wherein the first steam chamber surrounds the first tool part, and the second steam chamber surrounds the second tool part. In a further aspect, the first steam chamber may also surround multiple first tool parts arranged on a first mounting plate and the second steam chamber may also surround multiple second tool parts arranged on a second mounting plate. The steam chambers comprise inlet and outlet valves for controlling the transfer of steam, cooling and/or heating.

In one aspect of the shape moulding machine, the process of transferring steam to the tool comprises three acts of:
- a purging step for removing air from the steam chamber and pre-heating the tool parts;
- cross steaming for removing air from the closed cavity, softening polymer foam beads and fusion of the polymer foam beads in the closed cavity; and/or
- autoclave steaming for complete fusion of the polymer foam beads in the closed cavity.

In a further aspect of the step of purging, the inlet valves and outlet valves are kept open, so that steam flows through the steam chambers and thus the steam replaces the air in the steam chamber and heats up the first tool part and the second tool part. The step of purging may be performed before filling the closed cavity with polymer foam beads.

In a further aspect of the step of cross steaming, the air between polymer foam beads in the closed cavity is replaced by steam and as such the polymer foam beads can expand and then any trapped air between the beads is reduced. The cross-steaming step is performed by operating the valves between two modes and changing between the two modes during the step, the modes are:
- opening the inlet valve and closing the outlet valve in the first steam chamber, closing the inlet valve and opening the outlet valve in the second steam chamber; and
- closing the inlet valve and opening the outlet valve in the first steam chamber, opening the inlet valve and closing the outlet valve in the second steam chamber.

One effect of performing the purging step and/or the cross-steaming step is that the removal of air from the steam chamber and/or the closed cavity improves the heat transfer significantly.

One further effect of changing multiple times between the two modes during the cross-steaming step is that the strength of the finished article is increased, especially for large articles, articles with thick walls and articles with complicated shapes.

In a further aspect of the step of autoclave steaming, the pressure in the steam chambers is increased up to the required pre-set pressure and the required temperature for fusion of the foam beads is also attained, as such the foam beads will completely fuse together, and the surface will also be fused so that the production of the article is finished. The autoclave steaming step is performed by closing the outlet valves of the first steam chamber and the second steam chamber, so that the temperature and pressure of the steam chambers and the closed cavity are increased. In another aspect of the step of autoclave steaming, the inlet valves of the first steam chamber and the second steam chamber are also closed for a predetermined time, this further step improves the fusion of the polymer foam beads.

In a further aspect of the step of cross streaming, both outlet valves are temporarily closed so that the pressure in the steam chambers and the closed cavity is increased, this further step improves the fusion of the polymer foam beads.

The process of steaming may also comprise a further step of vacuum steaming, wherein air in the steam chambers is completely evacuated before the steps of steaming are performed. One effect of creating a vacuum in the steam chambers prior to the steaming process is that the strength of the finished articles is improved because trapped air between the polymer foam beads weakens the finished articles and air in the steam chambers and/or the closed cavity reduces the heat transfer to the polymer foam beads significantly.

In another aspect of the shape moulding machine, the process of transferring cooling to the tool comprises the steps of:
- condensing the steam in the steam chambers;
- injection of cold water into the steam chambers through a cooling line;
- injection of warm water into the steam chambers through a cooling line; and/or
- providing vacuum in the steam chambers.

The process of cooling the tool is required to increase the stability and to control the moisture content of the produced article. As the article is steamed the polymer foam becomes unstable, this is stabilized by reducing the pressure of the tool and cooling the article.

The step of condensing the steam in the steam chambers is achieved by closing the outlet valves of the two steam chambers. The step may further comprise water injection for a short time period.

The steps of cooling by injection of cold water or warm water into the steam chambers are achieved by injecting water with a temperature of e.g. 20 degrees Celsius and 60 degrees Celsius, respectively, until the required demoulding temperature is reached. The demoulding temperature differs for different applications, one example of a required demoulding temperature for cold water injection is 60 degrees Celsius and for warm water injection 80 degrees Celsius. By injecting the water into the steam chamber, excess steam is converted into condensate which can be removed from the tool through a condenser. The steam shall preferably be cooled sufficiently so that evaporation of the condensate inside the condenser is avoided, the condensate may be sufficiently cooled by lowering the temperature to e.g., below 30 degrees Celsius. The cooling water does not enter the closed cavity through the channels. However, the cooling air and cooling water does interact with the ribs arranged on the vapour surface, thereby making the cooling process more efficient.

The step of providing vacuum in the steam chambers is performed in order to obtain the following effects of:
- a faster cooling time of the expanded polymer foam, thereby also causing residual moisture in the foam to evaporate;
- dryer finished articles and tool cavity surfaces, as larger amounts of energy are extracted from the article and the tool;
- increased energy saving as less energy is required during the entire cooling process; and
- reduced production time as the cooling process is performed much faster.

The vacuum step may be performed in combination with the step of injecting cold or warm water into the steam chamber.

A further step of the cooling process may be to blow a cooling air through the cooling line to further reduce the temperature of the tool and the article, and to remove the remaining water in the cooling line.

In an aspect of the shape moulding machine, the shape moulding machine comprises attachment means configured for engaging and attaching the first tool part and the second tool part to the shape moulding machine. The attachment means may be configured for engaging and attaching the stabilising bars to the shape moulding machine.

In one embodiment of the shape moulding machine, the shape moulding machine comprises one or more mould carriers configured for holding the one or more first tool parts and/or the one or mor second tool parts of the tool so that the first and the second tool parts may be forced together or withdrawn from each other.

The one or more mould carriers are configured as an interface to enable the tool to be fitted to the shape moulding machine and is configured for replacing or moving the moulding tool.

In one aspect of the mould carriers, the mould carriers are adapted to hold the first mounting plate and the second mounting plate.

In one further aspect of the mould carriers, the mould carriers are configured to interact or be arranged on mechanical means of the shape moulding machine, e.g., hydraulic, electrical, pneumatic and/or mechanical means, so that the movement of the first tool part, the second tool part, the first mounting plate and/or the second mounting plate is carried out by the hydraulic, electrical, pneumatic and/or mechanical means.

A further objective of the present invention is achieved by a method for producing an article in expanded polymer foam material in a shape moulding machine comprising the acts of:
- arranging a tool in the shape moulding machine, wherein the tool comprises a first tool part, a second tool part and one or more material inlets, wherein the first tool part and the second tool part comprise a cavity surface and an opposite vapour surface;
- connecting the first tool part with the second tool part so that a closed cavity is formed between the cavity surface of the first tool part and the second tool part;
- providing polymer beads into the closed cavity through the material inlets;
- transferring steam from the vapor surface to the closed cavity through a plurality of channels arranged on the first tool part and the second tool part, wherein the channels extend from the cavity surface to the vapour surface so that the steam is evenly distributed across the cavity; and/or
- applying a cooling medium to be in contact with the vapour surface so that the temperature of the cavity surface is reduced.

In one embodiment of the method the tool is according to any one of the herein disclosed embodiments.

The acts of providing the closed cavity with polymer beads and transferring steam from the vapour surface to the closed cavity may be performed in any order as disclosed herein for the process of transferring steam to the tool.

The effect of applying the cooling medium to the vapour surface so that the temperature of the vapour surface, ribs and/or cavity surface is reduced is that the surface of the expanded article is cooled, which enables the article to slip from the cavity surface and be easily removed from the tool.

Use of the tool wherein the tool is according to any one of the herein disclosed embodiments for producing articles in expanded polymer foam material.

One advantage of using the tool of the present invention is that it is more economical compared to prior art tools as the tool requires less energy in terms of steam, heating and cooling; the tool has a reduced cycle time and can therefore produce more articles in the same time; and the tool requires less frequent maintenance in terms of e.g., removing stuck polymer foam material from the tool or replacement of parts of the tool.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
Figure 1a illustrates a second tool part
Figure 1b illustrates a lower view of a second tool part
Figure 1c illustrates a side view of a second tool part
Figure 2 illustrates a plane view of one wall of the tool
Figure 3a illustrates an upper view of a first tool part
Figure 3b illustrates a lower view of a first tool part
Figure 4a illustrates six first tool parts arranged on a first mounting plate
Figure 4b illustrates a lower view of six first tool parts arranged on a first mounting plate
Figure 5a illustrates six second tool parts arranged on a second mounting plate
Figure 5b illustrates a side view of six second tool parts arranged on a second mounting plate
Figure 6a illustrates a first tool part connected with a second tool part
Figure 6b illustrates a side view of a first tool part connected with a second tool part
Figure 7 illustrates one embodiment of a method for producing an article in expanded polymer foam
Figure 8a illustrates an upright square lattice pattern
Figure 8b illustrates a diagonal square lattice pattern
Figure 8c illustrates an oblique lattice pattern
Figure 8d illustrates an equilateral triangular lattice pattern (hexagonal lattice pattern)
Figure 8e illustrates a rhombic lattice pattern
Figure 8f illustrates an upright rectangular lattice pattern

### Detailed Description of the Invention

A number of examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealised or overly formal sense unless expressly so defined in the present specification.

| **Reference:** | **Reference number:** |
|---|---|
| Tool | 1 |
| First tool part | 10 |
| Wall thickness | 11,21 |
| Cavity surface | 12,22 |
| Vapour surface | 13,23 |
| Channel | 14,24 |
| Hollow volume | 15 |
| First channel | 141 |
| Adjacent channel | 142 |
| Second tool part | 20 |
| Sealing rim | 25 |
| Inner volume | 30 |
| Isometric pattern | 40 |
| Upright square lattice pattern | 42 |
| Diagonal square lattice pattern | 43 |
| Oblique lattice pattern | 44 |
| Equilateral triangular lattice pattern | 45 |
| Rhombic lattice pattern | 46 |
| Upright rectangular lattice pattern | 47 |
| Ribs | 50 |
| Material inlet | 60 |
| Ejector aperture | 65 |
| Fastening aperture | 68 |
| First mounting plate | 70 |
| First stabilising bar | 71 |
| Interior stabilising bar | 72 |
| Second mounting plate | 75 |
| Second stabilising bar | 76 |
| Frame | 77 |
| Method | 100 |
| Arranging | 110 |
| Connecting | 120 |
| Injecting | 130 |
| Transferring | 140 |
| Applying | 150 |

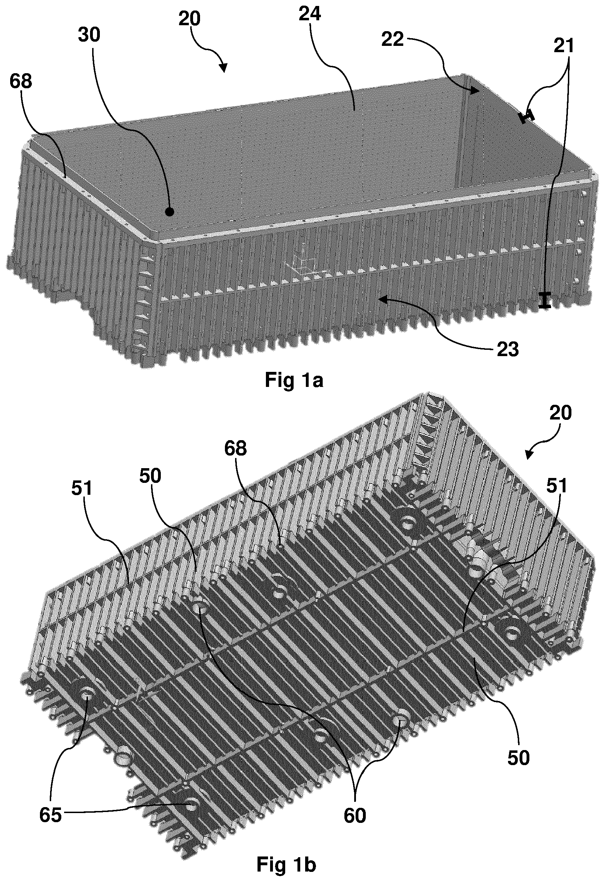

Figure 1a illustrates one embodiment of a second tool part 20 in the shape of an open box, the second tool part 20 comprises four vertical walls and a bottom wall (shown in fig. 1b). The second tool part 20 furthermore comprises a cavity surface 22, which faces an inner volume 30 of the second tool part 20, and a vapour surface 23, which faces an outside volume of the second tool part 20. A wall thickness 21 of the second tool part is measured between the vapour surface 23 and the cavity surface 22. The entire cavity surface 22 and vapour surface 23 is configured with through-going channels 24, wherein the channels 24 are adapted to transfer steam from the vapour surface 23 to the cavity surface 22 and subsequently the inner volume 30.

The second tool part 20 is assembled by connecting several components together and fastening them with screws and bolts through fastening apertures 68. E.g., in fig. 1a the vertical walls are connected at four vertical corners and a lower part of the walls is connected to the bottom wall.

Figure 1b illustrates a bottom view of the embodiment of the second tool part 20 of figure 1a, this figure illustrates how the bottom wall of the second tool part 20 comprises a plurality of material inlets 60 and ejector apertures 65. The figure also illustrates how on the vertical walls and the bottom wall a plurality of ribs 50 are arranged in parallel and with one or more intersecting ribs 51. The ribs 50,51 are arranged so that the stability of the second tool part 20 is improved and so that air can still flow through the channels 24.

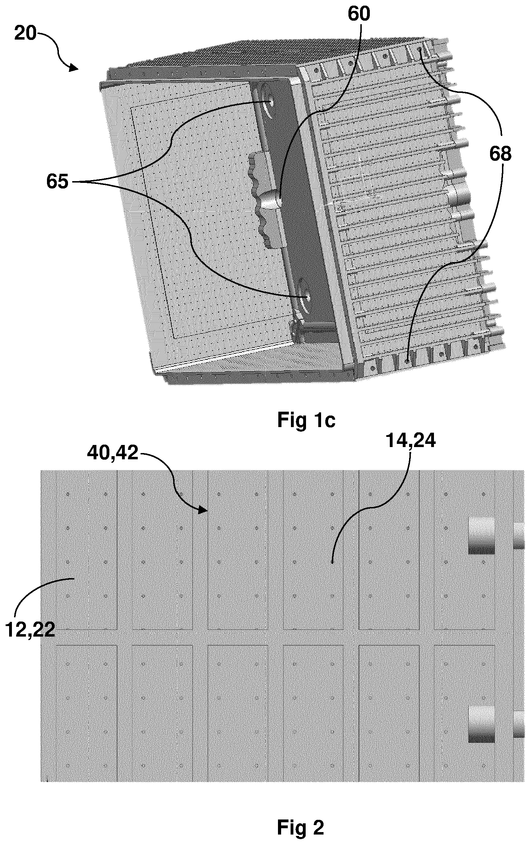

Figure 1c illustrates a side view of the embodiment of the second tool part 20 of figure 1a and 1b, the side view illustrates how the ejector apertures 65 are arranged in two corners of the bottom wall of the second tool part 20. As the article to be produced in the second tool part 20 is a hollow box, it is preferable to place the ejectors along the edge of the bottom wall, so that the ejecting force is transferred into the strongest part of the article. The material inlets 60 are also arranged near the vertical walls of the second tool part 20, so that polymer foam beads can be distributed along the bottom plate and the vertical walls during the production process.

Figure 2 illustrates one embodiment of a cavity surface 12,22 of a first tool part 10 and a second tool part 20. The cavity surface 12,22 comprises a plurality of apertures 14,24 arranged in an isometric pattern 40, in a preferred embodiment the isometric pattern is an upright square lattice pattern 42.

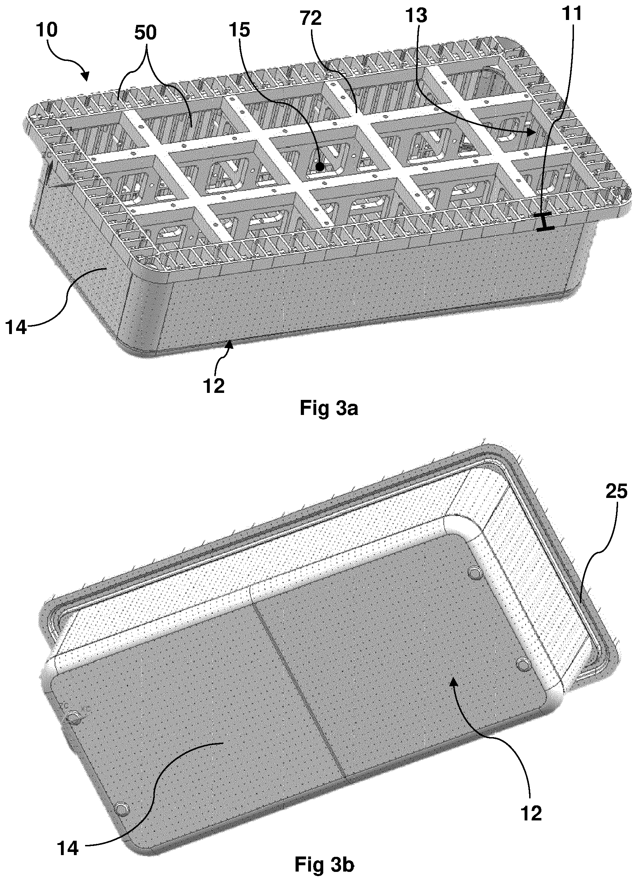

Figure 3a illustrates a top view of an embodiment of a first tool part 10, the top view illustrates an exemplary construction of the hollow volume 15 of the first tool part 10. The hollow volume 15 is partly surrounded by the vapour surface 13 of the first tool part 10, the vapour surface 13 is also covered with ribs 50 across the entire surface. In addition to the ribs 50, the first tool part 10 comprises a plurality of interior stabilising bars 72 for further reinforcing the first tool part 10. Similar to the embodiment of the second tool part, the first tool part 10 may be constructed from one or more components, e.g., walls, ribs 50, and interior stabilising bars 72, and fastened with screws and bolts.

The first tool part 10 also comprises a cavity surface 12 on the opposite side of the vapour surface 13. The channels 14 are through-going from the cavity surface 12 to the vapour surface 13 and are configured for transferring steam to the cavity surface 12. The wall with a wall thickness 11 is arranged between the vapour surface 13 and the cavity surface 12.

Figure 3b illustrates a bottom view of the embodiment of the first tool part 10 of fig. 3a, illustrating the vertical walls and bottom plate of the cavity surface 12. The corners and edges where the vertical walls meet the bottom plate may be bowed so that the surface of the expanded polymer foam article becomes smooth when the article is produced.

The first tool part 10 and the second tool part 20 are adapted for being connected so that a closed cavity is formed between the cavity surfaces 12,22, the closed cavity is a volume where polymer foam beads are supplied to and where the beads can be expanded into the polymer foam article.

The first tool part 10 may comprise a ridge 25 configured for holding a seal for ensuring that when the first tool part 10 is connected to the second tool part 20, the connection is water- and/or airtight.

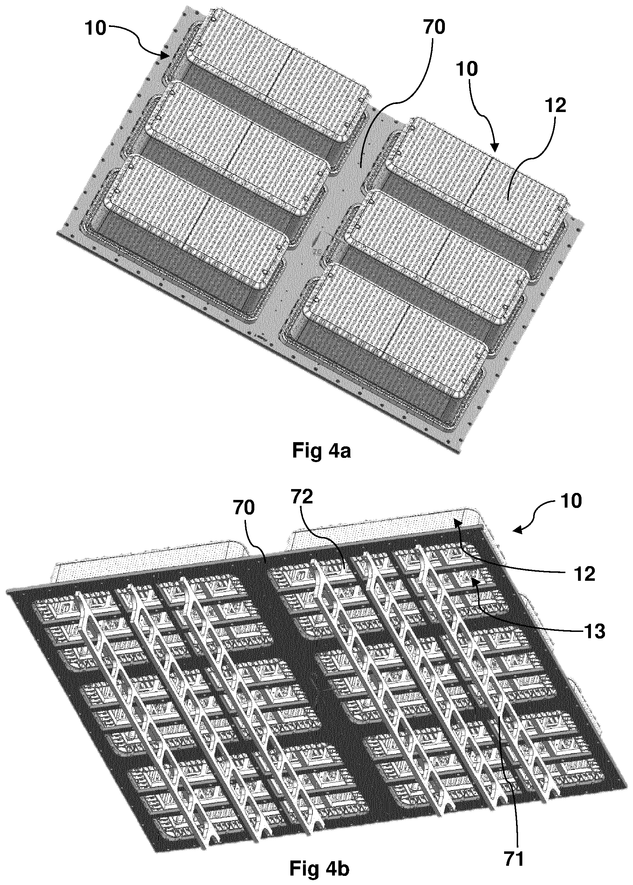

Figure 4a illustrates a bottom view of one embodiment of six first tool parts 10 arranged on a first mounting plate 70. The first tool parts 10 may be fastened to the first mounting plate 70 by screws and fasteners.

Figure 4b illustrates a top view of the embodiment of the first mounting plate 70 of fig. 4a. This illustration shows how the first mounting plate is adapted as a frame surrounding the outer edges of the vapour surface 13 of the first tool parts 10, so that the hollow volume is open. The first mounting plate 70 and the plurality of first tool parts are connected and fastened to one or more first stabilising bars 71. The first stabilising bars 71 are arranged to improve the stability of the first mounting plate 70 and the first tool parts 10 and are furthermore configured to interface with commercially available shape moulding machines, so that the first tool part 10 and the first mounting plate 70 may be retrofitted into existing shape moulding machines.

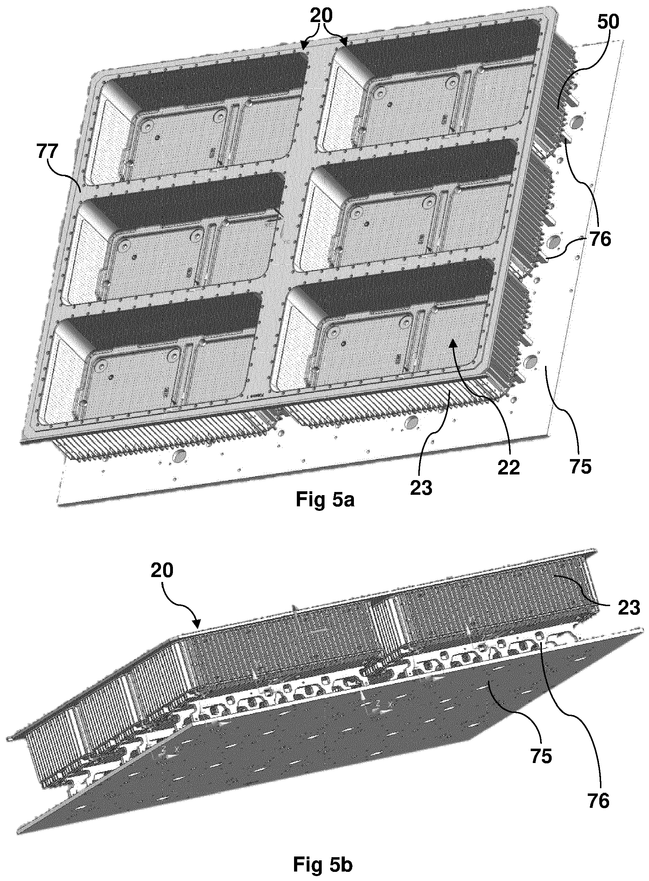

Figure 5a illustrates a bottom view of one embodiment of a second mounting plate 75 with six second tool parts 20 arranged on the second tool mounting plate 75. The six tool parts 20 are fastened to one or more second stabilising bars 76 arranged on the ribs and/or the vapour surface 23 of the second tool part 20. To ensure that the connection between one or more first tool parts arranged on a first mounting plate (see fig. 4a and 4b) and the second tool parts 20 arranged on the second mounting plate 75 is sealed, a frame 77 is arranged on the upper surrounding edge of each second tool part 20.

Figure 5b illustrates a side-bottom view of the second mounting plate 75 and multiple second tool parts 20. The drawing illustrates how the second stabilising bars 76 are arranged between the second tool parts 20 and the second mounting plate 75, the second stabilising bars 76 are configured to increase the stability of the second tool parts 20 and to be an interface between the second tool parts 20 and the second mounting plate 75.

One or more cooling lines may be arranged between the second tool parts 20 and the second mounting plate 75, the cooling lines may be configured to provide cooling water and/or air to the second tool parts 20 and/or the volume between the second tool parts 20 and the second mounting plate 75. The cooling lines may take on any of the embodiments and/or functions described herein.

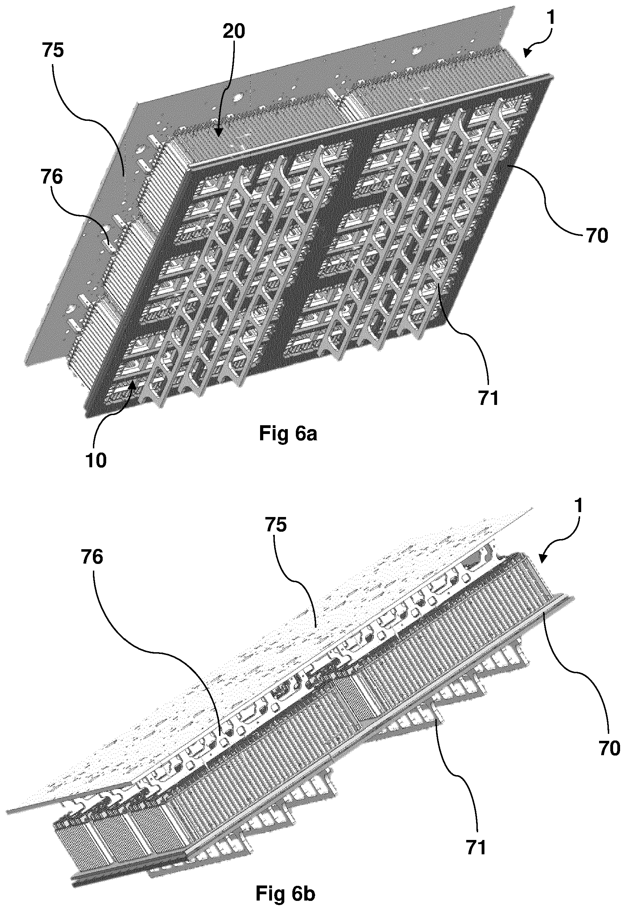

Figure 6a and 6b illustrate a first mounting plate 70 with multiple first tool parts 10 connected to a corresponding number of second tool parts 20 arranged on a second mounting plate 75. The combination of a first tool part 10 and a second tool part 20 constitutes the tool 1 of the present invention. Both the tool 1 and the combination of the first mounting plate 70 and the second mounting plate 75 are configured to be retrofitted to commercially available shape moulding machines.

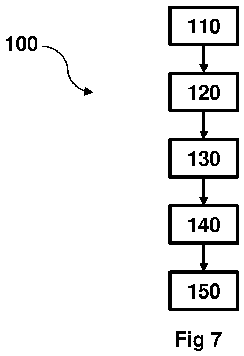

Figure 7 illustrates one embodiment of a method 100 for producing an article in expanded polymer foam material in a shape moulding machine comprising the acts of:
- arranging 110 a tool 1 in the shape moulding machine, wherein said tool comprises a first tool part 10, a second tool part 20 and one or more material inlets 60, wherein the first tool part and the second tool part comprises a cavity surface 12,22 and an opposite vapour surface 13,23;
- connecting 120 the first tool part 10 with the second tool part 20 so that a closed cavity is formed between the cavity surface 12,22 of the first tool part and the second tool part;
- providing 130 polymer beads into the closed cavity through the material inlets 60;
- transferring 140 steam from the vapor surface 13,23 to the closed cavity through a plurality of channels 14,24 arranged on the first tool part 10 and the second tool part 20, wherein said channels extend from the cavity surface 12,22 to the vapour surface 13,23 so that the steam is evenly distributed across the cavity; and/or
- applying 150 a cooling medium to be in contact with the vapour surface 13,23 so that the temperature of the cavity surface 12,22 is reduced.

The acts of providing polymer beads into the closed cavity and transferring steam from the vapour surface to the closed cavity may be performed in any order as disclosed herein for the process of transferring steam to the tool.

Figure 7 further illustrates one embodiment of the method 100 wherein the tool 1 is according to any one of the herein disclosed embodiments.

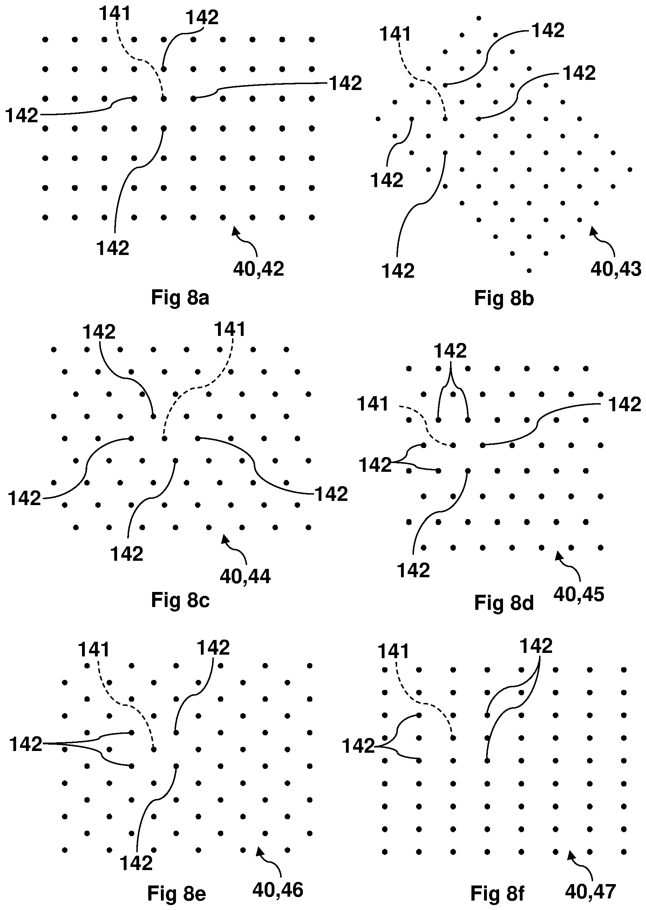

Figure 8a through figure 8f illustrate six different isometric patterns 40.

Figure 8a illustrates an upright square lattice pattern, where a first channel 141 is surrounded by four adjacent channels 142, wherein the four adjacent channels 142 are arranged at an equal distance from the first channels 141 arranged in the centre of the four adjacent channels 142, wherein the adjacent channels 142 are arranged at a 90-degree angle relative to each other and the first channel 141.

Figure 8b illustrates a diagonal square lattice pattern 43, wherein the diagonal square lattice pattern is a 45-degree rotation of the upright square lattice pattern in fig. 8a, wherein the 45-degree rotation is in the clockwise direction. For this pattern, the adjacent channels 142 may be arranged at the 12-o'clock, the 3-o'clock, the 6-o'clock and the 9-o'clock position relative to the first channel 141, all four adjacent channels 142 are placed at an equal distance from the first channel 141.

In another embodiment of the diagonal square lattice pattern 43, the adjacent channels may be the four channels placed closest to the first channel 141, these are the same channels referred to as adjacent channels 141 in fig. 8a.

Figure 8c illustrates an oblique lattice pattern 44, where the oblique lattice pattern 44 is different to the upright square lattice pattern 42 and the diagonal square lattice pattern 43, in that the adjacent channels 142 placed at an unequal distance from the first channel 141 are placed at angles different from 90-degree from each other.

Figure 8d illustrates an equilateral triangular lattice pattern 45 also called a hexagonal lattice pattern, where six adjacent channels 142 are arranged in a hexagon pattern or honeycomb pattern around the first channel 141. The six adjacent channels 142 are arranged at an equal distance from the first channel 141, and at any one adjacent channel 142 the angle between the two neighbouring adjacent channels is always 120-degrees.

Figure 8e illustrates a rhombic lattice pattern 46 and figure 8f is an upright rectangular lattice pattern 47, the rhombic lattice pattern 46 may also be called a centred rectangular lattice. In these patterns, the adjacent channels 142 are arranged at a 90-degree offset angle from each other and are of unequal length.

## Claims

1. A tool (1) for a shape moulding machine for producing articles in expanded polymer foam comprising a first tool part (10) and a second tool part (20), each tool part having a wall thickness (11,21), a cavity surface (12,22) being the mould surface and a vapour surface (13,23) facing away from the cavity surface, wherein the first tool part and the second tool part are configured to be connected to form a closed cavity between the cavity surfaces (12,22), and wherein the first tool part and/or the second tool part comprises one or more material inlets (60) configured to receive polymer foam beads and transfer said polymer foam beads to the closed cavity, wherein the first tool part (10) and the second tool part (20) each comprises a plurality of channels (14,24) extending between the cavity surface (12,22) and the vapour surface (13,23), said channels being configured to transfer steam from the vapour surface (13,23) to the closed cavity.

2. The tool (1) according to claim 1, wherein the wall thickness (11,21) is less than 15 mm, in the range of 1 to 10 mm, 1.5 to 6 mm or 2 to 4 mm.

3. The tool (1) according to claims 1 or 2, wherein the channels (14,24) are in the range of 0.2 to 1.2 mm, 0.4 to 1 mm or 0.6 to 0.8 mm in diameter.

4. The tool (1) according to any one of the preceding claims, wherein any two channels are arranged at a minimum distance (14,24) being in the range of 4 to 14 mm, 6 to 12 mm, or 8 to 10 mm.

5. The tool (1) according to any one of the preceding claims, wherein the channels (14,24) are arranged in a substantially isometric pattern (40).

6. The tool (1) according to any one or more of the preceding claims, wherein the vapour surface (13,23) of the first tool part (10) and/or the second tool part (20) comprises a plurality of ribs (50) protruding from the vapour surface (13,23).

7. The tool (1) according to claim 7, wherein the thickness of the ribs (50) extending outwards is in the range of 1 to 8 mm, 2 to 6 mm, or 3 to 4 mm.

8. The tool (1) according to any one or more of the preceding claims, wherein the vapour surface (13,23) of the first tool part (10) and/or the second tool part (20) comprises one or more stabilising bars (71,76) configured to increase the rigidity of the first tool part and/or the second tool part, respectively.

9. The tool (1) according to any one of the preceding claims, wherein the first tool part (10) and/or the second tool part (20) is made of aluminium.

10. A shape moulding machine for producing articles in expanded polymer foam, said shape moulding machine comprising a moulding tool according to any one of the preceding claims.

11. The shape moulding machine according to claim 10, wherein the shape moulding machine comprises one or more mould carriers configured for holding the one or more of the two tool parts (10,20) of the tool so that the two tool parts may be forced together or withdrawn from each other.

12. A method (100) for producing an article in expanded polymer foam material in a shape moulding machine comprising the acts of:
- arranging (110) a tool (1) in the shape moulding machine, wherein said tool comprises a first tool part (10), a second tool part (20) and one or more material inlets (60), wherein the first tool part and the second tool part comprise a cavity surface (12,22) and an opposite vapour surface (13,23);
- connecting (120) the first tool part (10) with the second tool part (20) so that a closed cavity is formed between the cavity surface (12,22) of the first tool part and the second tool part;
- providing (130) polymer beads into the closed cavity through the material inlets (60);
- transferring (140) steam from the vapor surface (13,23) to the closed cavity through a plurality of channels (14,24) arranged on the first tool part (10) and the second tool part (20), wherein said channels extend from the cavity surface (12,22) to the vapour surface (13,23) so that the steam is evenly distributed across the cavity; and/or
- applying (150) a cooling medium to be in contact with the vapour surface (13,23) so that the temperature of the cavity surface (12,22) is reduced.

13. The method (100) according to claim 12 wherein the tool (1) is according to one or more of claims 1-10.

14. Use of the tool (1) according to one or more of claims 1 to 10 for producing articles in expanded polymer foam material.
